# EUROPÄISCHE PATENTSCHRIFT

(11) **EP 3 143 637 B1**
(45) Veröffentlichungstag und Bekanntmachung des Hinweises auf die Patenterteilung: **13.05.2020**
(21) Anmeldenummer: 15737961.1
(22) Anmeldetag: 22.04.2015
(51) Int. Cl.: H01H 47/32

(54) **VORRICHTUNG ZUM SCHALTEN EINES HAUPTSTROMKREISES**
DEVICE FOR SWITCHING A MAIN CURRENT CIRCUIT
DISPOSITIF DE COMMUTATION D'UN CIRCUIT ÉLECTRIQUE PRINCIPAL

(30) Priorität: 22.04.2014 DE 102014005712
(43) Veröffentlichungstag der Anmeldung: 22.03.2017
(73) Patentinhaber: WISY AG Haustechniksysteme, Filtertechnik, 63699 Kefenrod (DE)
(72) Erfinder: DENK, Arnold, 63688 Gedern (DE); MAURER, Jan, 63699 Kefenrod (DE); KRÖNING, Michael, 35043 Marburg (DE)
(74) Vertreter: Hebing, Norbert
(86) Internationale Anmeldenummer: PCT/DE2015/000196
(87) Internationale Veröffentlichungsnummer: WO 2015/161840

(56) Entgegenhaltungen:
- EP-A1- 1 783 887
- KR-B1- 101 221 727

## Beschreibung

Die Erfindung bezieht sich auf eine Vorrichtung zum Schalten eines Hauptstromkreises zur Stromversorgung eines Stromverbrauchers mit einem Hauptschalter im Hauptstromkreis, einer Steuerung für die Betätigung des Hauptschalters, welche dazu eine oder mehrere Steuersignale auswertet, einem an eine Spannungsquelle anschließbaren Netzteil, das der Stromversorgung der Steuerung dient, und mit einem Sensor, dessen Zustand die Betätigung des Hauptschalters beeinflusst.

Eine derartige Vorrichtung wird z. B. für die Stromversorgung einer Tauchpumpe eingesetzt, wie dies in der DE 20 2013 000 051 U1 beschrieben ist. Bei der Entnahme von Wasser aus einer von der Tauchpumpe gespeisten Wasserleitung fällt zunächst der Druck in der Wasserleitung ab. Dies führt zu der Betätigung eines druckbetätigten, im Hauptstromkreis liegenden Schalters, wodurch die Tauchpumpe in Betrieb gesetzt wird, die daraufhin Wasser in die Wasserleitung fördert. Dies hat zur Folge, dass ein Reedkontakt geschlossen wird, der parallel zu dem zuvor erwähnten Schalter liegt, wodurch die Stromversorgung der Tauchpumpe aufrechterhalten wird, solange der Wasserleitung weiter Wasser entnommen wird.

Die Leistungsaufnahme von Pumpenmotoren ist relativ groß, so dass festgestellt werden konnte, dass übliche Reedkontakte wegen der hohen Ströme zum Verbacken neigen, sich also nicht mehr öffnen, wenn der sie betätigende Magnet durch eine Unterbrechung des Wasserflusses entfernt wird.

Es ist daher schon vorgesehen worden, den Reedkontakt nicht unmittelbar in die Hauptstromleitung zur Stromversorgung der Wasserpumpe zu schalten, sondern vielmehr dort ein Relais (Hauptschalter) vorzusehen, das von einer Steuerung betätigt wird. Der Durchfluss durch die Wasserleitung wird dabei weiterhin mittels eines Reedkontaktes überwacht. Die Steuerung wertet den Zustand des Reedkontaktes (offen, geschlossen) aus. Ist er auf Grund eines Wasserdurchflusses geschlossen, wird ein entsprechendes Signal zur Betätigung des Relais in der Hauptstromleitung gegeben. Dieses Relais wird so ausgelegt, dass es die im Hauptstromkreis auftretenden Ströme schadlos verkraftet.

Eine derartige Steuerung zur Versorgung einer Flüssigkeits-Förderpumpe, die Wasser in einen Karbonisierer leitet, ist in der DE 90 17 846 beschrieben.

Solche Steuerungen haben allerdings den Nachteil, dass sie einen hohen Stand-by-Verbrauch aufweisen, da eine ständige Überprüfung des Reedkontaktes oder eines anderen Durchflusssensors notwendig ist.

Um den Stromverbrauch einer Gerätesteuerung im Stand-by-Betrieb zu reduzieren, ist in der DE 10 2007 016 075 A1 schon vorgeschlagen worden, durch die manuelle Betätigung eines Schalters die Gerätesteuerung von der Netzspannung zu trennen, wenn sich das Gerät nicht in Betrieb befindet.

In der EP 1 783 887 A1 ist eine Schaltung zum Betätigen des Hauptschalters eines Gerätes beschrieben, bei der die Steuerung über einen Stromvereorgungsschalter entweder mit einer Batterie oder mit einem Versorgungsausgang des zu schaltenden Geräts verbunden wird. Die Steuerung erhält weiterhin ein Signal von einem Einschaltkreis, auf Grund dessen der Hauptschalter betätigt wird oder die Schaltung in einen Stand-By-Modus geschaltet wird, in dem auschließlich der Einschaltkreis noch mit Strom versorgt wird, was den Stromverbrauch im Stand-By-Modus zwar senkt aber nicht vollständig auf Null reduziert.

Aus der KR 101221727 B1 ist eine ähnliche Schaltung bekannt.

Die Erfindung beruht somit auf der Aufgabe, bei einer Vorrichtung, wie sie im Oberbegriff des Anspruches 1 definiert ist, bei der durch den Zustand eines Sensors der Betrieb des Verbrauchers gesteuert wird, so zu gestalten, dass der Stromverbrauch im Stand-by-Betrieb zu Null wird und ohne dass dazu eine manuelle Betätigung notwendig ist.

Die Aufgabe wird erfindungsgemäß dadurch gelöst, dass das Netzteil unter Verwendung eines Nebenschalters an die Spannungsquelle anschließbar ist, dass der Zustand des Sensors den Schaltzustand des Nebenschalters beeinflusst und dass die Steuerung so eingerichtet ist, dass ein Zustand der Vorrichtung, wonach die Steuerung mit Strom aus dem eingeschalteten Netzteil versorgt ist, als ein Steuersignal dient, das die Steuerung zu der Betätigung des Hauptschalters heranzieht .

Der Sensor erfüllt somit zwei Aufgaben: Zum einen wird durch seine Betätigung das Netzteil an eine Spannungsquelle angeschlossen und damit die Steuerung des Hauptschalters mit Strom versorgt. Zum anderen wird auf Grund der Stromversorgung ein logisches Signal zur Verfügung gestellt, das die Steuerung zur der Betätigung des Hauptschalters heranzieht.

Bei der Steuerung einer Wasserpumpe ist der Sensor z. B. - wie oben schon beschrieben - ein Reedkontakt, der den Wasserfluss in einer von der Wasserpumpe gespeisten Was serleitung registriert. Wird die Wasserleitung durch Betätigen eines Wasserhahns geöffnet, wird durch den sich einstellenden Wasserfluss der Reedkontakt geschlossen. Dies bewirkt, dass sowohl die Stromversorgung für die Steuerung des Hauptschalters aktiviert wird als auch in Folge auch der Hauptschalter geschlossen wird, so dass die Pumpenförderung einsetzt, die zumindest so lange anhält, wie Wasser durch die Wasserleitung fließt und der Wasserdurchfluss nicht durch Schließen des Wasserhahns wieder unterbrochen wird. Eine solche Schaltung hat im Stand-by-Betrieb, also wenn die Wasserpumpe nicht läuft, keinen Stromverbrauch, da die Steuerung von der sie mit Strom versorgenden Spannungsquelle getrennt ist.

Damit die an der Steuerung anliegende Netzspannung auch als Steuersignal interpretiert werden kann, besitzt die die Steuerung eine logische Schaltung, die einen Steuereingang hat, der mit einem Pol des Netzteils verbunden ist, so dass die dort anliegende Spannung als ein Steuersignal der logischen Schaltung zugeführt ist.

In einigen Fällen kann es notwendig sein, den Verbraucher zumindest kurzeitig auch dann noch zu betreiben, wenn der Sensor schon kein Signal mehr liefert. Dies ist z. B. bei einer Pumpensteuerung der Fall, wenn die Wasserleitung wieder geschlossen wird. Mit einem Nachlaufen der Wasserpumpe soll erreicht werden, dass ein Druck in der wieder geschlossenen Wasserleitung aufgebaut wird, so dass es bei erneutem Öffnen der Wasserleitung zu einer anfänglichen Wasserfluss kommt, der ein Einschalten der Wasserpumpe - wie oben beschrieben - bewirkt.

Dazu sieht die Erfindung vor, dass die Steuerung einen Halteausgang aufweist, der mit dem Nebenschalter derart verbunden ist, dass bei der Ausgabe eines Haltesignals am Halteausgang der Nebenschalter betätigt ist.

Insbesondere bei einer Pumpensteuerung kann die Steuerung so eingerichtet sein, dass das Haltesignal zeitgesteuert ist. Dies erlaubt es, die Nachlaufzeit der Wasserpumpe und damit den Druckaufbau in der geschlossenen Wasserleitung einzustellen.

Da bei einer Beendigung des Durchflusses die Stromversorgung der Steuerung unterbrochen wird, ist vorgesehen, dass die Steuerung einen Kurzzeitstromspeicher aufweist, der es erlaubt, ein Haltesignal auch dann auszugeben, wenn die Stromversorgung der Steuerung durch das Netzteil unterbrochen worden ist. Auf diese Weise kann die Wasserpumpe in Betrieb gehalten werden. Die kurzzeitige Unterbrechung der Stromversorgung dient weiterhin als Triggersignal für den Beginn der Nachlaufzeit.

Durch die vorgeschlagene Schaltung wird erreicht, dass im Stand-by-Betrieb die Leistungsaufnahme bei Null liegt. Um zu erreichen, dass auch im Betrieb der Anlage die Steuerung wenig Strom verbraucht, ist vorgesehen, dass das Netzteil aus einem Tiefsetzsteller und einem davor geschalteten Gleichrichter besteht, wobei der Nebenschalter zwischen dem Tiefsetzsteller und dem Gleichrichter geschaltet ist.

Ein derartiger Tiefsetzsteller hat bekanntermaßen einen sehr geringen Verbrauch. Der Gleichrichter stellt weiterhin die Spannung zur Verfügung, die benötigt wird, um den Nebenschalter zu betätigen.

Dazu ist der Nebenschalter vorzugsweise als spannungsgesteuerter elektronischer Schalter ausgebildet. Spannungsgesteuert soll heißen, dass lediglich die Anlegung einer Spannung, nicht aber das Fließen eines Stromes, zum Betätigen des Schalters führt.

Um dem Schalter ein Spannungssignal zur Verfügung zu stellen, ist vorgesehen, dass der Nebenschalter als spannungsgesteuerter elektronischer Schalter ausgebildet ist, dass der Sensor einen schließbaren Kontakt aufweist, der in Reihe mit einem Vorwiderstand an den Ausgang des Gleichrichters angeschlossen ist, und dass eine Abzweigung zwischen dem Vorwiderstand und dem Sensor mit dem Steuereingang des elektronischen Schalters verbunden ist.

Der schließbare Kontakt kann z. B. ein Reedkontakt sein. Bei dem elektronischen Schalter handelt es sich vorzugsweise um einen Feldeffekttransistor oder um ein C-MOS.

Sobald der schließbare Kontakt (Reedkontakt) geschlossen ist, bildet er zusammen mit dem Vorwiderstand eine Art Spannungsteiler, dessen Mittenabgriff eine Spannung am spannungsgesteuerten elektronischen Schalter zur Verfügung stellt.

Die Spannung für den spannungsgesteuerten Nebenschalter kann aber auch auf andere Weise zur Verfügung gestellt werden. So kann z. B. der Sensor ein Kondensator sein, der so mit einer Antenne verbunden ist, dass er auf Grund elektromagnetischer Strahlung aufladbar ist. Hierbei kann es sich um hochfrequente Strahlung, aber auch um Infrarotstrahlung handeln. Der Kondensator wird mit dem Steuereingang des elektronischen Schalters verbunden. Da dieser lediglich eine Spannung, aber kaum einen Strom zum Schalten benötigt, kann ausreichend Energie zum Laden des Kondensators ohne Weiteres z. B. aus einem schwachen Funksignal abgeleitet werden.

Grundsätzlich kann die Spannung für den spannungsgesteuerten Nebenschalter auch von einem Schallwandler, wie z. B. einem Piezoelement, zur Verfügung gestellt werden.

Wie schon oben erwähnt, ist eine bevorzugte Anwendung der o. g. Vorrichtung einer Anordnung, bei der der Verbraucher der Motor einer Wasserpumpe ist, wobei der Sensor so installiert ist, dass er den Wasserdurchfluss durch eine von der Wasserpumpe gespeisten Wasserleitung sensiert.

Ein weiterer Aspekt, der nicht Gegenstand es Patents ist, ist es, dass jedenfalls die Spannungsquelle eine Gleichspannungsquelle ist und dass der Nebenschalter als spannungsgesteuerter elektronischer Schalter ausgebildet ist. Denn dann braucht diesem nur eine elektrische Spannung zur Verfügung gestellt werden um zu schalten, ohne dass der Schaltvorgang elektrische Energie benötigt. Mit dieser Maßnahme allein wird schon erreicht, dass der Stand-by-Verbrauch zu Null wird, ohne dass vorzusehen wäre, dass die an der Steuerung anliegende Netzspannung als Steuersignal ausgewertet werden müsste.

Vorzugsweise besteht das Netzteil aus einem Tiefsetzsteller und einem davor geschalteten Gleichrichter, wobei der Nebenschalter zwischen dem Tiefsetzsteller und dem Gleichrichter angeordnet ist.

Um verlustfrei eine Schaltspannung am Steuereingang des elektronischen Schalters zur Verfügung zu stellen, wird - wie oben beschrieben - vorgegangen: Entweder wird ein Spannungsteiler oder eine Antenne genutzt.

Des Weiteren kann - wie oben schon erläutert - vorgesehen werden, dass ein Pol des Netzteils mit einem Steuereingang der logischen Schaltung der Steuerung verbunden ist.

Ebenso kann ein Halteausgang der Steuerung verwirklicht werden.

Die Erfindung bezieht sich außerdem auf eine Wasserpumpe, die von einem an einen Hauptstromkreis angeschlossenen Motor angetrieben ist und an deren Druckseite eine Wasserleitung angeschlossen ist, die in einer Wasserentnahmestelle endet, wobei ein Sensor an der Wasserleitung installiert ist, der auf einen Wasserdurchfluss durch die Wasserleitung anspricht. Der Sensor ist in eine Vorrichtung zum Schalten des Hauptstromkreises eingebettet, wie sie zuvor beschrieben ist.

Das Anliegen einer Netzteilspannung an der Steuerung bildet ein Steuersignal, das jedenfalls vorliegen muss, damit der Motor der Wasserpumpe eingeschaltet werden kann.

Im Folgenden soll anhand eines Ausführungsbeispieles die Erfindung näher erläutert werden. Dazu zeigen:
- Fig.1: eine hydraulische/elektrische Schaltung für eine Pumpensteuerung und
- Fig.2: eine dazu alternative Schaltung.

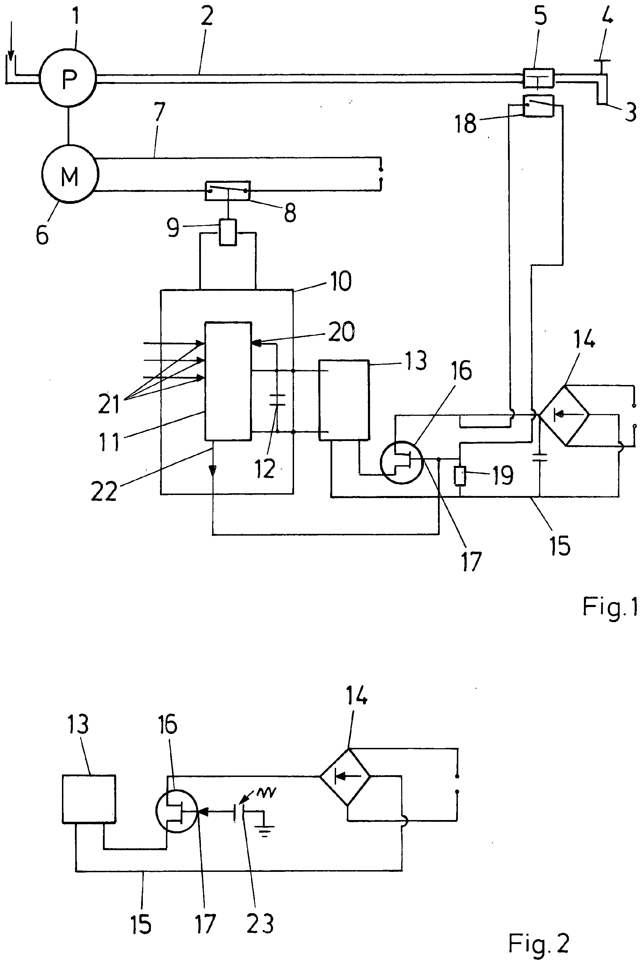

Zunächst wird auf die Fig. 1 Bezug genommen: Die Erfindung wird anhand einer Pumpensteuerung für ein Wasserversorgungssystem beschrieben. Diese besteht aus einer Wasserpumpe 1, die aus einem Wassernetz oder einem Wasserspeicher Wasser in eine Wasserleitung 2 zu einer Entnahmestelle 3 fördert. Die Entnahmestelle 3 ist mit einem Wasserhahn versehen, der manuell geöffnet oder geschlossen werden kann.

In der Wasserleitung 2 befindet sich ein so genannter Wasserwächter 5, wie er allgemein in Gebrauch ist, um den Fluss durch eine Wasserleitung zu erfassen. Eine typische Bauform eines Wasserwächters 5 besitzt eine mit einem Magnet bestückte Membran, die sich wegen einer vom fließenden Wasser bewirkten Druckminderung verbiegt, wodurch der Magnet an einen Reedkontakt 18 heranbewegt wird und diesen schließt.

Der Antrieb der Wasserpumpe 1 erfolgt mittels eines Elektromotors 6, der über einen Hauptstromkreis 7 mit einer Spannungsquelle verbunden ist. Im Hauptstromkreis 7 befindet sich ein Hauptschalter 8, der elektromagnetisch von einem Elektromagneten 9 betätigt wird. Zur Steuerung des Elektromagneten 9 ist eine elektronische Steuerung 10 mit einer logischen Schaltung 11 vorgesehen. Weiterhin befindet sich am Eingang für die Stromversorgung der Steuerung 10 ein elektrischer Kurzzeitstromspeicher in Form eine Kondensators 12.

Die Versorgung der Steuerung 10 mit elektrischer Energie erfolgt mittels eines Netzteils 13, das an einen Gleichrichter 14 angeschlossen ist, wobei in dem Versorgungsstromkreis 15 zwischen dem Gleichrichter 14 und dem Netzteil 13 ein spannungsgesteuerter elektronischer Schalter in Form eines Feldeffekttransistors 16 geschaltet ist, der als Nebenschalter im Sinne der Erfindung fungiert.

Das Gate 17 des Feldeffekttransistors 16 ist mit dem Mittenabgriff eines Spannungsteilers verbunden, der aus dem oben erwähnten Reedkontakt 18 am Strömungswächter 5 und einem Vorwiderstand 19 besteht. Um den Gleichrichter 14 möglichst wenig zu belasten, ist der Vorwiderstand 19 hochohmig. Ein Feldeffekttransistor 16 benötigt zum Schalten lediglich eine Schaltspannung an seinem Gate. Beim Schalten erfolgt keine Energieaufnahme durch das Gate, so dass der Feldeffekttransistor 16 verlustfrei geschaltet werden kann.

Wenn der Reedkontakt 18 geschlossen ist, liegt am Mittenabgriff praktisch die vom Gleichrichter 14 gelieferte Spannung vor, die am Gate 17 wirksam wird, so dass der Feldeffekttransistor 16 durchschaltet und am Netzteil 13 eine Spannung anliegt, die ggf. durch das Netzteil 13 reduziert an die Steuerung 10 weitergegeben wird.

Die Stromversorgung der Steuerung 10 dient auch dazu, den Betätigungsstrom für den Elektromagneten 9 zur Verfügung zu stellen.

Die Steuerung 10 beinhaltet, wie schon oben erwähnt, eine logische Schaltung 11, an der über eine erste Steuerleitung 20 die vom Netzteil 13 ausgegebenen Spannung als Steuersignal anliegt.

Dieses Steuersignal wird ggf. zusammen mit weiteren Signalen an den weiteren Steuereingängen 21 benötigt um festzulegen, ob der Elektromagnet 9 zum Schließen des Hauptschalters 8 mit Strom versorgt werden kann.

An den weiteren Steuereingängen 21 liegen z. B. Überwachungssignale an, die, soweit keine Störungen vorliegen, eine Betätigung des Hauptschalters 8 und damit ein Ingangsetzen des Motors freigeben. Liegt somit keine Störung vor, wird ein Signal am ersten Steuereingang 20, das aus dem Betrieb des Netzteils 13 herrührt, zu einer Betätigung des Elektromagneten 9 führen, der den Hauptschalter 8 im Hauptstromkreis 7 schließt.

Sobald ein Wasserdurchfluss durch die Wasserleitung 2 durch Schließen des Wasserhahns 4 unterbrochen wird, wird der Reedkontakt 18 geöffnet, so dass das Gate 17 spannungslos wird und der Feldeffekttransistor 16 sperrt. Damit ist die Stromversorgung des Netzteils 13 und in Folge auch die Stromversorgung der Steuerung 10 unterbrochen. In Folge davon öffnet auch der Hauptschalter 8.

Um ein Nachlaufen der Wasserpumpe 1 zu ermöglichen, sieht die logische Schaltung 11 einen Halteausgang 22 vor, der mit dem Gate 17 verbunden ist. Der Halteausgang 22 ist mit einer hier nicht näher dargestellten Zeitschaltung verbunden, so dass auch nach Schließen der Wasserleitung 2 der Feldeffekttransistor 16 aufgrund des Spannungssignals vom Haltausgang 22 durchgeschaltet bleibt, so dass die Steuerung 10 weiterhin den Hauptschalter 8 geschlossen hält.

Um den Beginn des Nachlaufzeitraums festzulegen, wird zunächst der Abfall der Spannung am ersten Steuereingang 20 registriert, wodurch eine Zeitschaltuhr in Betrieb gesetzt wird und eine Haltespannung am Halteausgang 22 ausgegeben wird. Da in diesem Moment keine Stromversorgung für die Steuerung 10 gegeben ist, ist dem Netzteil ein als Kurzzeitstromspeicher dienender Kondensator 23 parallel geschaltet, der für den kurzen Zeitraum zwischen dem Sperren des Feldeffekttransistors 16 und seinem erneuten Durchschalten auf Grund der Haltespannung die Steuerung 10 mit Strom versorgt. Dabei kann die Entladezeit des Kondensators als Zeitschaltuhr verwendet werden.

Wie in der Fig. 2 dargestellt ist, braucht die Steuerspannung für das Gate 17 des Feldeffekttransistors 16 nicht unbedingt durch einen Spannungsteiler mit einem Reedkontakt 18 dargestellt werden, da zum Durchschalten des Feldeffekttransistors 16 am Gate 17 lediglich eine Spannung angelegt werden muss. Da über das Gate 17 kein Strom fließt, reichen kleinste Leistungen aus, um den Feldeffekttransistors 16 zu schalten. Denkbar wäre z. B. ein Kondensator 23, der über eine nicht dargestellte Antenne durch Funkwellen aufgeladen wird. Auch andere Effekte, wie z. B. akustische Effekte, können genutzt werden, um die Schaltspannung für das Gate 17 darzustellen.

**Bezugszeichenliste**

| | | | |
|---|---|---|---|
| 1 | Wasserpumpe | 16 | Feldeffekttransistor |
| 2 | Wasserleitung | 17 | Gate |
| 3 | Entnahmestelle | 18 | Reedkontakt |
| 4 | Wasserhahn | 19 | Vorwiderstand |
| 5 | Wasserwächter | 20 | erster Steuereingang |
| | | | |
| 6 | Elektromotor | 21 | Steuereingänge |
| 7 | Hauptstromkreis | 22 | Halteausgang |
| 8 | Hauptschalter | 23 | Kondensator |
| 9 | Elektromagnet | | |
| 10 | Steuerung | | |
| | | | |
| 11 | logische Schaltung | | |
| 12 | Kondensator als Kurzzeitstromspeicher | | |
| 13 | Netzteil | | |
| 14 | Gleichrichter | | |
| 15 | Versorgungsstromkreis | | |

## Patentansprüche

1. Vorrichtung zum Schalten eines Hauptstromkreises (7) zur Stromversorgung eines Stromverbrauchers mit einem Hauptschalter (8) im Hauptstromkreis (7), einer Steuerung (10) für die Betätigung des Hauptschalters (8), welche dazu eine oder mehrere Steuersignale auswertet, einem an eine Spannungsquelle anschließbaren Netzteil (13), das der Stromversorgung der Steuerung (10) dient, und mit einem Sensor (18), dessen Zustand die Betätigung des Hauptschalters (8) beeinflusst, wobei das Netzteil (13) unter Verwendung eines Nebenschalters (16) an die Spannungsquelle anschließbar ist, und wobei der Zustand des Sensors (18) den Schaltzustand des Nebenschalters (16) beeinflusst,
**dadurch gekennzeichnet, dass** die Steuerung (10) so eingerichtet ist, dass ein Zustand der Vorrichtung, wonach die Steuerung (10) mit Strom aus dem eingeschalteten Netzteil (13) versorgt ist, als Steuersignal dient, das die Steuerung zu der Betätigung des Hauptschalters heranzieht .

2. Vorrichtung nach Anspruch 1, **dadurch gekennzeichnet, dass** die Steuerung (10) eine logische Schaltung (11) aufweist und dass diese einen Steuereingang (20) hat, der mit einem Pol des Netzteils (13) verbunden ist, so dass die dort anliegende Spannung als ein Steuersignal der logischen Schaltung zugeführt ist.

3. Vorrichtung nach Anspruch 1 oder 2, **dadurch gekennzeichnet, dass** die Steuerung (10) einen Halteausgang (22) aufweist, der mit dem Nebenschalter (16) derart verbunden ist, dass bei der Ausgabe eines Haltesignals am Halteausgang (22) der Nebenschalter (16) betätigt ist.

4. Vorrichtung nach Anspruch 3, **dadurch gekennzeichnet, dass** die Steuerung (10) so eingerichtet ist, dass das Haltesignal zeitgesteuert ist.

5. Vorrichtung nach Anspruch 3 oder 4, **dadurch gekennzeichnet, dass** die Steuerung (10) einen Kurzzeitstromspeicher (12) aufweist, der es erlaubt, ein Haltesignal auch dann auszugeben, wenn die Stromversorgung der Steuerung (10) durch das Netzteil (13) unterbrochen worden ist.

6. Vorrichtung nach einem der vorhergehenden Ansprüche, **dadurch gekennzeichnet, dass** das Netzteil (13) aus einem Tiefsetzsteller und einem davor geschalteten Gleichrichter (14) besteht und dass der Nebenschalter (16) zwischen dem Tiefsetzsteller und dem Gleichrichter (14) angeordnet ist.

7. Vorrichtung nach Anspruch 6, **dadurch gekennzeichnet, dass** der Nebenschalter als spannungsgesteuerter elektronischer Schalter (16) ausgebildet ist, dass der Sensor (18) einen schließbaren Kontakt aufweist, der in Reihe mit einem Vorwiderstand (19) an den Ausgang des Gleichrichters (14) angeschlossen ist, und dass eine Abzweigung zwischen dem Vorwiderstand (19) und dem Sensor (18) mit dem Steuereingang (17) des elektronischen Schalters (16) verbunden ist.

8. Vorrichtung nach einem der vorhergehenden Ansprüche, **dadurch gekennzeichnet, dass** der schließbare Kontakt ein Reedkontakt (18) ist.

9. Vorrichtung nach einem der vorhergehenden Ansprüche, **dadurch gekennzeichnet, dass** der elektronische Schalter ein Feldeffekttransistor (16) oder ein C-MOS ist.

10. Vorrichtung nach einem der vorhergehenden Ansprüche, **dadurch gekennzeichnet, dass** der Nebenschalter als spannungsgesteuerter elektronischer Schalter (16) ausgebildet ist, dass der Sensor ein Kondensator (23) ist, der so mit einer Antenne verbunden ist, das er auf Grund elektromagnetischer Strahlung aufladbar ist, und dass der Kondensator (23) mit dem Steuereingang (17) des elektronischen Schalters (16) verbunden ist.

11. Anordnung mit einer Vorrichtung nach einem der vorhergehenden Ansprüche, **dadurch gekennzeichnet, dass** der Verbraucher der Motor (6) einer Wasserpumpe (1) ist und dass der Sensor (18) so installiert ist, dass er den Wasserdurchfluss durch eine von der Wasserpumpe (1) gespeisten Wasserleitung (2) sensiert.

## Claims

1. A device for switching a main current circuit (7) for the current supply of a current consumer having a main switch (8) in, the main current circuit (7), a control unit (10) for actuating the main switch (8) which evaluates one or multiple control signals for this purpose, a power-supply unit (13) which can be connected to a voltage source and which is used for the current supply to the control unit (10), and having a sensor (18), the state of which influences the actuation of the main switch (8), wherein the power-supply unit (13) can be connected to the voltage source by using a sub-switch (16) and wherein the state of the sensor (18) influences the switching state of the sub-switch (16), **characterized in that** the control unit (10) is set up in such a manner that a state of the device in which the control unit (10) is supplied with current from the active power-supply unit (13) serves as a control signal which is used by the control unit to actuate the main switch.

2. The device according to claim 1, **characterized in that** the control unit (10) comprises a logic circuit (11) with a control input (20) which is connected to a terminal of the power-supply unit (13) so that the voltage applied there is fed as a control signal to the logic circuit.

3. The device according to claim 1 or 2, **characterized in that** the control unit (10) has a holding output (22) which is connected to the sub-switch (16) in such a manner that said sub-switch (16) is actuated when a hold signal is emitted at the holding output (22).

4. The device according to claim 3, **characterized in that** the control unit (10) is set up in such a manner that the hold signal is time-controlled.

5. The device according to claim 3 or 4, **characterized in that** the control unit (10) has a short-term current store (12) which allows a hold signal to be emitted even if the current supply to the control unit (10) has been interrupted by the power-supply unit (13).

6. The device according to one of the preceding claims, **characterized in that** the power-supply unit (13) comprises a step-down converter and a rectifier (14), arranged ahead of the step-down converter, and that the sub-switch (16) is arranged between the step-down converter and the rectifier (14) .

7. The device according to claim 6, **characterized in that** the sub-switch is configured as a voltage-controlled electronic switch (16), that the sensor (18) has a closable contact which is connected to the output of the rectifier (14) in series with a series resistor (19) and that a branch between the series resistor (19) and the sensor (18) is connected to the control input (17) of the electronic switch (16).

8. The device according to one of the preceding claims, **characterized in that** the closable contact is a reed contact (18) .

9. The device according to one of the preceding claims, **characterized in that** the electronic switch is a field effect transistor (16) or a CMOS.

10. The device according to one of the preceding claims, **characterized in that** the sub-switch is configured as a voltage-controlled electronic switch (16), that the sensor is a capacitor (23) which is connected to an antenna in such a manner that it can be charged based on electromagnetic radiation and the capacitor (23) is connected to the control input (17) of the electronic switch (16).

11. An arrangement having a device according to one of the preceding claims, **characterized in that** the consumer is the motor (6) of a water pump (1) and the sensor (18) is installed in such a manner that it senses the water flow through a water pipe (2) fed by the water pump (1).

## Revendications

1. Dispositif de commutation d'un circuit d'alimentation principal (7) pour fournir de l'énergie à un appareil consommateur d'énergie avec un interrupteur principal (8) dans le circuit d'alimentation principal (7) d'un contrôleur (10) pour actionner l'interrupteur principal (8), qui évalue à cette fin un ou plusieurs signaux de commande, une unité d'alimentation (13) qui peut être connectée à une source de tension et qui sert à alimenter le contrôleur (10), et un capteur (18) dont l'état influence l'actionnement de l'interrupteur principal (8), dans lequel un bloc d'alimentation (13) utilisant un interrupteur annexe (16) peut être connectée à la source de tension, et dans lequel l'état du capteur (18) influence l'état de commutation de l'interrupteur annexe (16), **caractérisé en ce que** le contrôleur (10) est configuré de telle manière que un état du dispositif, selon lequel le contrôleur (10) est alimenté en courant par le bloc d'alimentation sous tension (13) sert de signal de commande que le contrôleur utilise pour actionner l'interrupteur principal

2. Dispositif selon la revendication 1, **caractérisé en ce que** le contrôleur (10) présente un circuit logique (11) et que celui-ci a une entrée de commande (20) qui est connectée à un pôle du bloc d'alimentation (13), de sorte que la tension appliquée est fournie comme un signal de commande du circuit logique.

3. Dispositif selon la revendication 1 ou 2, **caractérisé en ce que** le contrôleur (10) a une sortie d'arrêt (22), qui est connectée au commutateur annexe (16) de sorte que lors de l'émission d'un signal d'arrêt au niveau de la sortie d'arrêt (22), l'interrupteur annexe (16) est actionné.

4. Dispositif selon la revendication 3, **caractérisé en ce que** la commande (10) est configurée de manière à ce que le signal d'arrêt soit commandé dans le temps.

5. Dispositif selon la revendication 3 ou 4, **caractérisé en ce que** le contrôleur (10) présente une mémoire de courant à court terme (12) qui permet l'émission d'un signal d'arrêt même lorsque l'alimentation électrique du contrôleur (10) a été interrompue par le bloc d'alimentation (13)

6. Dispositif selon une des revendications précédentes, **caractérisé en ce que** l'alimentation (13) est constituée d'un convertisseur basse tension et d'un redresseur (14) connectés devant lui et que l'interrupteur annexe (16) est disposé entre le convertisseur abaisseur et le redresseur (14) .

7. Dispositif selon la revendication 6 t **caractérisé en ce que** l'interrupteur annexe est conçu comme un interrupteur électronique commandé en tension (16) et que le capteur (18) a un contact fermable qui est connecté en série avec une résistance (19) à la sortie du redresseur (14) connecté et qu'une branche entre la résistance en série (19) et le capteur (18) est connecté à l'entrée de commande (17) de l'interrupteur électronique (16).

8. Dispositif selon une des revendications précédentes, **caractérisé en ce que** le contact fermable est un contact de Reed (18).

9. Dispositif selon une des revendications précédentes, **caractérisé en ce que** le commutateur électronique est un transistor à effet de champ (16) ou un C-MOS.

10. Dispositif selon une des revendications précédentes, **caractérisé en ce que** l'interrupteur annexe est conçu comme un interrupteur électronique commandé en tension (16), que le capteur est un condensateur (23), qui est connectée à une antenne afin qu'elle puisse être chargée en raison du rayonnement électromagnétique, et que le condensateur (23) est connecté à l'entrée de commande (17) de l'interrupteur électronique (16).

11. Agencement comportant un dispositif selon une des revendications précédentes, **caractérisé en ce que** l'appareil consommateur est le moteur (6) d'une pompe à eau (1) et que le capteur (18) est installé de telle sorte qu'il détecte le débit d'eau à travers une conduite d'eau (2) alimentée par la pompe à eau (1).
